(19) **Europäisches Patentamt**
**European Patent Office**
**Office européen des brevets**

(11) **EP 1 566 009 B1**

(12) **EUROPEAN PATENT SPECIFICATION**

(45) Date of publication and mention
of the grant of the patent:
**15.08.2007 Bulletin 2007/33**

(51) Int Cl.:
**H04L 9/22** (2006.01)

(21) Application number: **03757595.8**

(86) International application number:
**PCT/CA2003/001538**

(22) Date of filing: **06.10.2003**

(87) International publication number:
**WO 2004/047361 (03.06.2004 Gazette 2004/23)**

(54) **METHOD OF GENERATING A STREAM CIPHER USING MULTIPLE KEYS**

VERFAHREN ZUM ERZEUGEN EINER STROMVERSCHLÜSSELUNG MIT MEHREREN SCHLÜSSELN

PROCEDE DE GENERATION D'UN CHIFFRE CONTINU AU MOYEN DE MULTIPLES CLES

(84) Designated Contracting States:
**AT BE BG CH CY CZ DE DK EE ES FI FR GB GR HU IE IT LI LU MC NL PT RO SE SI SK TR**

(30) Priority: **20.11.2002 US 299847**

(43) Date of publication of application:
**24.08.2005 Bulletin 2005/34**

(73) Proprietors:
• **Boren, Stephen Laurence**
**Vancouver, British Columbia V6A 4J4 (CA)**
• **Brisson, Andre Jacques**
**Vancouver, British Columbia V6J 2A6 (CA)**

(72) Inventors:
• **Boren, Stephen Laurence**
**Vancouver, British Columbia V6A 4J4 (CA)**

• **Brisson, Andre Jacques**
**Vancouver, British Columbia V6J 2A6 (CA)**

(74) Representative: **Eisenführ, Speiser & Partner**
**Patentanwälte Rechtsanwälte**
**Postfach 10 60 78**
**28060 Bremen (DE)**

(56) References cited:
**EP-A- 0 720 327          US-A- 4 058 673**
**US-A1- 2003 016 823**

• **CARROLL J M: "DO-IT-YOURSELF CRYPTOGRAPHY" COMPUTERS & SECURITY, ELSEVIER SCIENCE PUBLISHERS. AMSTERDAM, NL, vol. 9, no. 7, 1 November 1990 (1990-11-01), pages 613-619, XP000164602 ISSN: 0167-4048**

**Description**

Technical Field

The invention relates to the field of encryption methods and more particularly to a method of generating a stream cipher to encrypt electronic communications which may be extremely long.

Background Art

Various methods of encryption to provide secure electronic communications are well known in the art. In symmetric methods of encryption, the sender and the recipient use the same code or key to encrypt and decrypt the message. The only completely secure cipher which cannot possibly be broken or deciphered is the One-Time Pad (OTP). A OTP takes a stream of bits that contains the plaintext message, and a secret random bit-stream of the same length as the plaintext (the key). To encrypt the plaintext with the key, each pair of bits from the key and plaintext is sequentially acted on by the exclusive-or function to obtain the ciphertext bit. The ciphertext cannot be deciphered if the key is truly random and the key is kept secret from an unauthorised party. The problem with this method is that the key should be at least the same length as the message. If a shorter key is used and repeated then the cipher can be broken. In some cases the data which needs to be encrypted is extremely large.

US 4,058,673 discloses a method for generating a stream cipher having a length of x bits. i) A number n representing a number of sub-keys is selected. Furthermore, n unique relatively prime numbers mn each representing a unique sub-key length mn bits are selected. ii) N unique numbers are generated each having a length of mn bits. iii) A (n + 1) number R is generated. iv) For each bit which position is in said nth random number corresponds to p, where p < mn and p being a function of R, a function of each pth bit of each of said n random numbers is applied to generate a value. v) The value of p is incremented by one. vi) The steps iv) and v) are repeated and each value produced in step iv) is concatenated to the previous value produced in step iv) until the stream cipher of x bits in length has been produced.

There is therefore a need for a method of generating a random key, or OTP, which is of variable length and that allows for encryption of very large amounts of data.

Disclosure of Invention

The present invention provides a method and a computer program product according to the appended claims.
The invention further provides a computer program product for carrying out the method.

Brief Description of Drawings

In drawings which disclose a preferred embodiment of the invention:

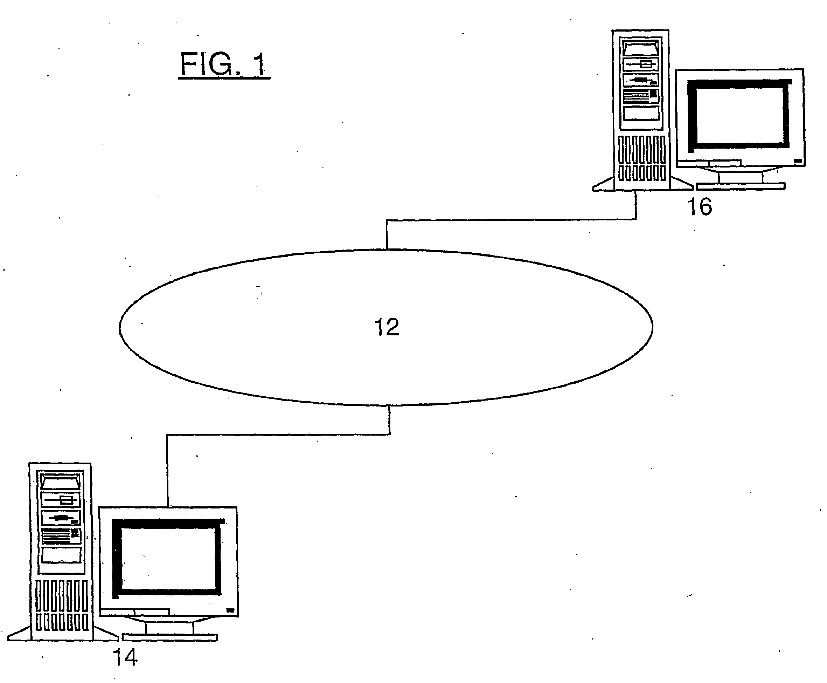

Fig. 1 is a schematic illustration of a computer system for carrying out the method of the invention; and
Fig. 2 is a flow chart illustrating the method of the invention.

Best Mode(s) For Carrying Out the Invention

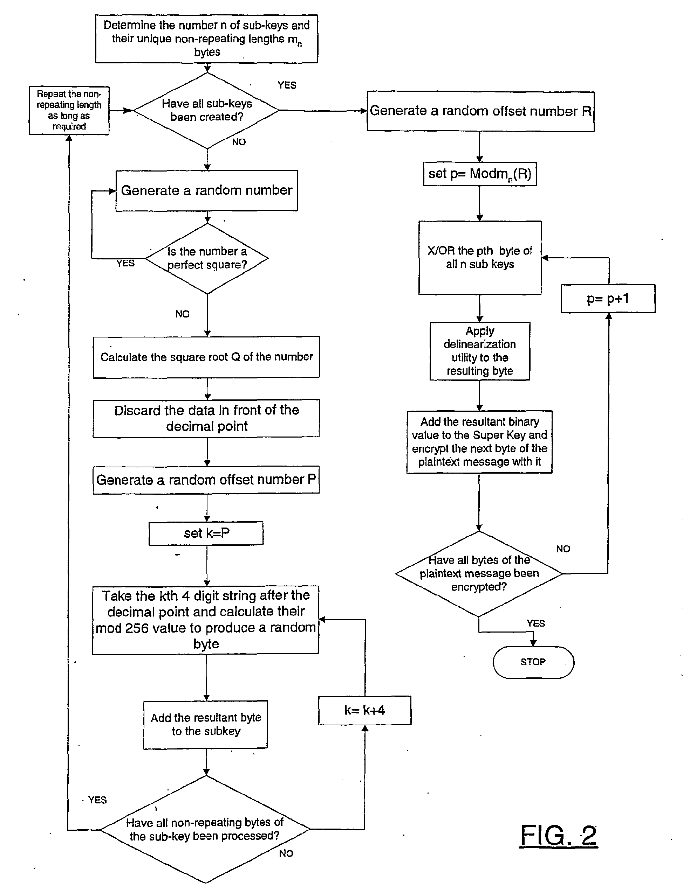

Fig. 2 illustrates by way of a flowchart the method of generating the encryption key of the present invention. In particular an encryption key, a non-repeating stream cipher of indefinite length referred to herein as the Super Key, is formed by combining sub-keys. Any number n of sub keys $K_1$, $K_2$, ..., $K_n$ can be specified depending on the application. The greater the number of sub-keys, the greater the length of the non-repeating Super Key. The length of each sub key is a prime number of bytes (preferably with prime numbers larger than 10).

The first step in the process is to determine how large a Super Key, or stream cipher, to deploy. The number n of sub-keys and the non-repeating length $m_n$ of each sub-key, in bytes, are selected. The sub-keys each have a unique non-repeating length, that is, no two sub-keys are of the same non-repeating length. Preferably the sub-key non-repeating lengths are prime numbers of bytes. Preferably the length of the subkeys, in bytes, are prime numbers in the range 2, 3, 5, ..., 1021, as there are 172 different prime numbers in this range. The selection may be done by manually entering the number of sub-keys and their prime number non-repeating lengths. Alternatively, the number of keys and their prime number non-repeating lengths is programmed into an application, or a program randomly selects the number of sub-keys and their non-repeating length. For n sub-keys $K_n$, the non-repeating length of the Super Key will be Size ($K_1$) X Size ($K_2$) X Size ($K_3$) ...X Size ($K_n$). For example, assume 10 sub-keys of the following prime number non-repeating lengths are used:

Sub Key 1 = 13 bytes = $K_1$
Sub Key 2 = 17 bytes = $K_2$
Sub Key 3 = 19 bytes = $K_3$
Sub Key 4 = 23 bytes = $K_4$
Sub Key 5 = 29 bytes = $K_5$
Sub Key 6 = 31 bytes = $K_6$
Sub Key 7 = 37 bytes = $K_7$
Sub Key 8 = 41 bytes = $K_8$
Sub Key 9 = 43 bytes = $K_9$
Sub Key 10 = 47 bytes = $K_{10}$

The resulting non-repeating Super Key length is 13X 17 X 19 X 23 X 29 X 31 X 37 X 41 X 43 X 47 = 266,186,053,068,611 bytes. Thus, using a small number of sub-keys, each of small prime number non-repeating length results in an extremely long non-repeating Super Key. The total definition for the size of the Super Key above is contained in 300 bytes (the sum of the lengths of the non-repeating sub-keys) and the header (number of sub-keys and their lengths). Thus the total definition for a Super Key will be a fraction of the size of the Super Key.

While preferably the non-repeating length of each sub-key is a prime number of bytes, to improve the randomness of the resulting cipher, the method will also work if non-prime number lengths are used, as long as the resulting cipher is very large.

To select the number of sub-keys, preferably this is calculated by taking the first two digits generated by a random stream, MODed by 50 and adding 50 to provide a number of keys between 50 and 99.

Each sub-key of the multi-key process may be created as follows. First a random number which is not a perfect square is generated, preferably by a highly random source. Preferably it is an integer in the range of 500 to 700 digits. This serves as a "first seed value" O. It is verified that the selected value O is not a perfect square. If it is, then additional random values will be generated until one meets this criterion. The second seed value is a 32-bit value that is used to seed the rand function of the computer. Random number generators that are included in the operating systems of most computers are pseudo-random and not very robust. These values, however, are sufficient as a starting point. The second random number P is also generated from the computer's rand function. It is then MODed by 100 to set the starting point. The square root Q of the first seed value O is calculated, resulting in an irrational number Q (one that extends infinitely after the decimal point and is non-repeating). The resultant string of digits after the decimal point is potentially infinite in length and is highly random. The computer discards the digits in front of the decimal and computes the number Q up to P digits after the decimal. Then, starting at the Pth digit of Q after the decimal point, the computer sequentially selects 4 digits at a time, and calculates the Mod 256 value of the 4 digits. This results in an 8-bit value. This value is used as the first byte of the sub-key. This process is repeated 4 digits at a time, continuing with the next digits in sequence, until a string of random data equal to the prime number non-repeating length of the sub-key being created is completed. This process is repeated for all the sub keys until the non-repeating length for all the sub keys are created. Each sub-key then is formed by taking the non-repeating string of bytes thus created, and repeating it as often as necessary to form a sub-key of sufficient length to create the Super Key in combination with the other sub-keys.

The algorithm for generating the sub-keys can be described as follows:

1. Treat seed1 as the decimal representation of an integer in the range of 500-700 digits.
2. Let X: = seed1
3. Let Y: = $\sqrt{X}$ is the irrational number generated by square rooting X
4. Let $Z_1, Z_2, Z_3, Z_4,$ .. be the digits after the decimal point in the decimal representation of Y. Each $Z_i$ is in the range 0,..,9.
5. Call srand(seed2). // only the first time
6. Call rand() to get the irrational starting point, start.
7. Let start := rand() mod 100. start is in the range 0,1,..,99.
8. Throw away $Z_1$ and $Z_2$ all the way to $Z_{start}$.
9. Let tmp := $10*Z_{(start+1)} + Z_{(start+2)}$. Throw away those used values.
10. Let n := 50 + (tmp mod 50). n is in the range 50,51,..,99.
11. For i := 1,2,..,n, do:
12. Let j = 3*(i-1)
13. Let tmp be the next byte from the Z stream.
14. Let tmp := $100*Z_{j+1} + 10*Z_{j+2} + Z_{j+3}$
15. Let t := 172 - (tmp mod 172). t is in the range 1,2,..,172.
16. Let u be the $t^{th}$ prime among the sequence 2,3,5,..,1021.
17. If u is equal to any of $1^1$, $1^2$, .., $1^{\{i-1\}}$, set t to (t+1)mod 172 goto 16

18. Set $1^i$ = u.

19. Next I : goto 11 until all subkey sizes are set.

20. For i := 1,2,..,n, do:

21. For j := 0, 1, 2, .., $1^i$, do:

22. Letk:=4*j

23. Let tmp be the next byte from the Z stream.

24. Let tmp := $(1000*Z_k + 100*Z_{k+1} + 10*Z_{k+2} + Z_{k+3})$ mod 256

25. Let $s^i_j$ := tmp

26. Next j : Next subkey byte

27. Next I: Next subkey

28. For i := 0,1,2,..,255, do:

29. Let j := 4*i

30. Let tmp := $(1000*Z_j + 100*Z_{j+1} + 10*Z_{j+2} + Z_{j+3})$ mod 256

31. If tmp is equal to any of S[0], S[1], .., S[i-1], set to (tmp+1)mod 256 goto 31

32. Set S[i] := tmp.

33. Next i

34. Let offset := $Z_i Z_{i+1} ... Z_{i+9}$

35. Return n, $(1^1,1^2,..,1^n)$, $(s^1,s^2,..,s^n)$, S[256] and offset.

36. Save in keyfile and add seed1 and start value to DB

37. Increment seed1 and goto 2 //repeat until enough keys are created

Once all the sub-keys are created as above, the Super Key (cipher) is created to the length required. This means the Super Key will continue to be created to encrypt the associated data to be encrypted, and continues to be created only until all the data is encrypted. First a random number R ("third seed value", or the starting offset for the Super Key, as opposed to the starting point P for the number Q) is generated. Starting with any one of the n sub-keys, having length $m_n$, the $Modm_n$ of R is calculated and the $Modm_n$(R)th byte of each sub-key is consecutively exclusive-or'd (X/OR'd) with the corresponding $Modm_n$(R)th byte of every other subkey. For example, if R=100, and the length of the first sub-key is 97 bytes and the second sub-key 43 bytes, then the 3rd byte of sub-key 1 is selected and X|OR'D with the 14th byte of sub-key 2 and corresponding bytes of the other remaining sub-keys selected in the same way based on R. The process is repeated until all the selected bytes from each sub-key have been X/OR'd. The resulting value may then be put through a substitution cipher or another delinearization function to delinearize the Super Key stream, as described further below. The resultant binary value is then added to the Super Key by concatenation. The next, subsequent byte of sub-key 1 is then X|OR'D with the next byte of sub-key 2 and so on. Again the process is repeated until all the selected bytes from each sub-key have been X/OR'd and delinearized. The resulting binary value of each function is again added to the Super Key by concatenation. While the X/OR function is preferred, it will be apparent that other functions can be applied. For example, mathematical functions of addition or subtraction can be used. As each byte of the Super Key is generated, the corresponding byte of the plaintext message is then encrypted with the corresponding byte of the Super Key by the exclusive-or function or some other mathematical function. Once all the bytes of the plaintext message have been encrypted the generation of the Super Key terminates. The encrypted message can then be decrypted applying the inverse of the encrypting function to it and the Super Key.

To illustrate further the generation of the Super Key from the subkeys, let $s^{\{i\}}_j$ denote the $j$-th byte of the $i$-th "sub key". Let $\ell^{\{i\}}$ denote the length of the $i$-th sub-key. For example, we might have $\ell^{\{1\}}$ = 13, $\ell^{\{2\}}$ = 17, and so on. Create from the "sub key" i the unending sequence of bytes

$$s^{\{i\}}_0, s^{\{i\}}_1, s^{\{i\}}_2, \cdots, s^{\{i\}}_{\ell^{\{i\}}}, s^{\{i\}}_0, s^{\{i\}}_1 \cdots$$

Let $s^{\{i\}}_j$ denote the $j$-th byte of the above sequence, if $j$ is any natural number 0 to $\infty$; the lowest value of $j$ in the subscript of $s^{\{i\}}_j$ is Rmodulo $\ell\{i\}$ where R is a random number. Then, the $j$-th byte of the "Super Key," call it $Z_j$, is defined by

$$z_j = s_j^{\{1\}} \oplus s_j^{\{2\}} \oplus \cdots \oplus s_j^{\{n\}}$$

Here, " $\oplus$ " denotes the XOR operation. The first byte of the Super Key is:

$$Z_1 = S_{R\bmod\ell^{\{1\}}}^{\{1\}} \oplus S_{R\bmod\ell^{\{2\}}}^{\{2\}} \oplus \cdots \oplus S_{R\bmod\ell^{\{n\}}}^{\{n\}}$$

Where Rmod $\ell^{\{i\}}$ returns an integer in the range 0,1,2,..., ($\ell^{\{i\}}$ -1) The "SuperKey" has a j value that ranges from 0 to (($\ell^{\{1\}} \times \ell^{\{2\}} \times \ell^{\{3\}} ... \ell^{\{n\}}$ - 1).

Let $P_0,P_1,P_2,P_3,...$ be the bytes of the plaintext, and $C_0,C_1,...$ the bytes of the ciphertext, in order. Also, $Z_0,Z_1,...$ denotes the bytes of the "Super Key" (computed as already described above). We define the ciphertext by $C_i := P_i$ xor $S[Z_i]$. The ciphertext C is formed by concatenating the bytes $C_0, C_1,..,$and then C is returned as the result of the encryption process. Decryption works in reverse in the obvious manner.

To encrypt an L-byte plaintext, an L-byte Super Key is generated, and a big number counter T is used to count the number of bytes in the plaintext. The output is an L-byte ciphertext. To decrypt the ciphertext, the same big number counter T is used and the output is the L-byte plaintext.

In order to reduce the linearity of the ciphertext using the present method, a further step may be applied to the Super Key before the plaintext message is encrypted. In the preferred embodiment, a substitution cipher is applied to the Super key, and the resultant string is then used to encrypt the plaintext message. For example, an array of 256 unique bytes is created, from 1 to 256 ordered randomly. The first byte in the Super Key then has substituted for it the value of the x+1st byte in the Super Key, where x is the first value in the 256 byte array. The second byte in the Super Key then has substituted for it the value of the y+2nd byte in the Super Key, where y is the second value in the 256 byte array, and so on. The 256-byte array can be formed from one of the sub-keys, plugging in bytes from a sub-key into the array so long as they don't repeat a previous entry in the array.

The linearity of the cipher text can be reduced also by applying the substitution cipher to the encrypted message (ciphertext) however it is more effective to apply the substitution cipher to the Super Key prior to encrypting. Other utilities besides a substitution cipher can be used to break linearity, such as invertible non-linear function (INLF) utilities available from SANDIA labs. These are useful to provide protection against the Berlekamp-Massey attack.

While preferably the random non-repeating string which forms each sub-key is generated as described above, the method will also work if the non-repeating string of each sub-key is simply generated by a random number generator to form each sub-key, as long as the overall resultant length of the Super key is sufficiently large so that the resultant Super Key is at least double the size of the data to be encrypted.

The foregoing method can be used to produce a personal security system whereby the key is used to encrypt personal files that the user wishes to secure. In that case no method of distribution of the key will be required. As each file is encrypted a new file named {OLDFILENAME}·{OFFSET}.wn. The OLDFILENAME includes the extension to allow for easy decryption and maintaining the same file format for functionality. As each file is encrypted, it is immediately decrypted and compared to the original and then both the test copy and the original file are deleted using a clean sweep deletion process (entire file rewritten as 0's and then 1's and then deleted).

A preferred key file format is defined as follows:

```
typedef struct wnkeyfiletype {
   char field[2]; // must be WN to identify file format
   long version; // file type version number to allow changes
   BIGNUMBER offset; // the offset is a large number stored as a
         // string of decimal digits delineated by ""'s
   long numsk; // the number of subkeys
   long sklen[numsk]; // the individual subkey lengths
   char sk1[sklen[1]]; // the 1 st subkey
   char sk1[sklen[2]]; // the 2nd subkey
   char sk1[sklen[3]]; // the 3rd subkey
      ...     ...       ...       ...
   char sknumsk[sklen[numsk]]; // the numskth subkey
   char substit[256]; // the substitution cipher key
} WNKEYFILE;
```

The foregoing key file format is standard. The only different value is the offset that is stored in a string of decimal digits that are delineated by "'"s. An example of this would be "98-7654321", this allows for values ranging up to 1000 digits long which prevents the reuse of sections of the key stream if the offset is implemented properly.

The present invention is described above as a computer-implemented method, for example to encrypt and decrypt communications between computers 14 and 16 over network 12. It may also be embodied as a computer hardware apparatus, computer software code or a combination of same. The invention may also be embodied as a computer-readable storage medium embodying code for implementing the invention. Such storage medium may be magnetic or optical, hard or floppy disk, CD-ROM, firmware or other storage media. The invention may also be embodied on a computer readable modulated carrier signal.

As will be apparent to those skilled in the art in the light of the foregoing disclosure, many alterations and modifications are possible in the practice of this invention without departing from the scope thereof. Accordingly, the scope of the invention is to be construed in accordance with the substance defined by the following claims.

**Claims**

1. A method of generating a stream cipher having length x bytes, the method comprising the steps of:

> i) selecting a number n representing a number of subkeys, and n unique prime numbers $m_n$ each representing a unique non-repeating sub-key length $m_n$ bytes;
> ii) generating n unique random numbers, each having non-repeating length $m_n$ bytes;
> iii) generating a n+lst random number R;
> iv) for each byte whose position in said $n^{th}$ random number is p, where $p = Modm_n (R)$, consecutively applying a function to each $p^{th}$ byte of each of said n random numbers to generate a value;
> v) incrementing the value of p by 1; and
> vi) repeating step iv) and v) and concatenating each said value produced in step iv) to the previous value produced in step iv) until said stream cipher of x bytes in length has been produced.

2. The method of claim 1 wherein said selected length $m_n$ of each said sub-key is a prime number greater than 10.

3. The method of claim 1 wherein said function applied consecutively to each said $p^{th}$ bytes of said n random numbers is the exclusive-or function, which is applied by obtaining the result of applying the exclusive-or function initially to the $n^{th}$ and the $n+1^{st}$ pair of $p^{th}$ bytes where n= 1 and then consecutively incrementing n by 1 and applying the exclusive-or function to said result and the next $p^{th}$ byte.

4. The method of claim 1 comprising the further step of applying a delinearization function to said stream cipher.

5. The method of claim 4 wherein said delinearization function is a substitution cipher.

6. The method of claim 1 wherein each of said n random numbers are generated by:

> i) generating a $n + 2^{nd}$ random number which is not a perfect square;
> ii) calculating the square root of said $n + 2^{nd}$ random number;
> iii) generating a $n + 3^{rd}$ random number;
> iv) commencing with a digit whose position in said square root of said $n + 2^{nd}$ random number is calculated based on said $n + 3^{rd}$ random number, taking finite strings of digits from said square root of said $n + 2^{nd}$ random number sequentially and converting each finite string into a byte;
> v) concatenating each byte sequentially until the selected length $m_n$ of said each of said n random numbers has been reached.

7. The method of claim 6 wherein said finite strings of digits are at least 4 digits long.

8. The method of claim 7 wherein said finite string is converted into a byte by applying a *mod* function.

9. The method of claim 8 wherein said finite string is converted into a byte by applying a *mod* 256 function.

10. A computer program product for generating a stream cipher having length x bytes, said computer program product comprising a computer usable medium having computer readable program code means embodied in said medium for:

i) generating n unique random numbers, each having non-repeating length $m_n$ bytes where $m_n$ is a prime number;

ii) generating a n+ 1 st random number R;

iii) for each byte whose position in said $n^{th}$ random number is p, where $p = Mod m_n (R)$, consecutively applying a function to each $p^{th}$ byte of each of said n random numbers to generate a value;

iv) incrementing the value of p by 1; and

v) repeating step iii) and iv) and concatenating each said value produced in step iii) to the previous value produced in step iii) until said stream cipher of x bytes in length has been produced.

11. The computer program product of claim 10 wherein said selected length $m_n$ of each said sub-key is a prime number greater than 10.

12. The computer program product of claim 10 wherein said function applied consecutively to each said $p^{th}$ bytes of said n random numbers is the exclusive-or function, which is applied consecutively by obtaining the result of applying the exclusive-or function initially to the $n^{th}$ and the $n+1^{st}$ pair of $p^{th}$ bytes where n=1 and then consecutively incrementing n by 1 and applying the exclusive-or function to said result and the next $p^{th}$ byte.

13. The computer program product of claim 10 wherein said computer usable medium has computer readable program code means embodied in said medium for the further step of applying a delinearization function to said stream cipher.

14. The computer program product of claim 13 wherein said delinearization function is a substitution cipher.

15. The computer program product of claim 10 wherein each of said n random numbers is generated by:

i) generating a n + $2^{nd}$ random number which is not a perfect square;

ii) calculating the square root of said n + $2^{nd}$ random number;

iii) generating a n + $3^{rd}$ random number;

iv) commencing with a digit whose position in said square root of said n + $2^{nd}$ random number is calculated based on said n + $3^{rd}$ random number, taking finite strings of digits from said square root of said n + $2^{nd}$ random number sequentially and converting each finite string into a byte;

v) concatenating each generated byte sequentially until the selected length $m_n$ of said each of said n random numbers has been reached.

16. The computer program product of claim 15 wherein said finite strings of digits are at least 4 digits long.

17. The computer program product of claim 15 wherein said finite string is converted into a byte by applying a *mod* function.

18. The computer program product of claim 17 wherein said finite string is converted into a byte by applying a *mod* 256 function.

**Patentansprüche**

1. Verfahren zum Erzeugen einer Stromverschlüsselung mit einer Länge von x Bytes, mit den Schritten:

i) Auswählen einer Zahl n, die für eine Anzahl von Unter-Schlüsseln steht, und von n eindeutigen Primzahlen $m_n$, die jeweils für eine eindeutige, sich nicht wiederholende Unter-Schlüssellänge von $m_n$ Bytes stehen,

ii) Erzeugen von n eindeutigen Zufallszahlen, wobei jede eine sich nicht wiederholende Länge von $m_n$ Bytes aufweist,

iii) Erzeugen einer n+1-ten Zufallszahl R,

iv) für jedes Byte, dessen Position in der n-ten Zufallszahl p darstellt, wobei $p = Mod m_n (R)$, aufeinanderfolgendes Anwenden einer Funktion auf jedes p-te Byte von jeder der n Zufallszahlen zum Erzeugen eines Wertes,

v) Erhöhen des Wertes von p um 1, und

vi) Wiederholen der Schritte iv) und v) und Zusammenfügen jedes der in Schritt iv) erzeugten Werte mit dem vorherigen in Schritt iv) erzeugten Wert, bis die Stromverschlüsselung mit einer Länge von x Bytes erzeugt wurde.

2. Verfahren nach Anspruch 1, wobei die ausgewählte Länge $m_n$ jedes Unter-Schlüssels eine Primzahl größer als 10 ist.

3. Verfahren nach Anspruch 1, wobei die aufeinanderfolgend auf jedes der p-ten Bytes der n Zufallszahlen angewandte Funktion die exklusiv-oder-Funktion ist, die durch Erhalten des Ergebnisses des Anwendens der exklusiv-oder-Funktion zunächst auf das n-te und das n+1-te Paar von p-ten Bytes angewendet wird, wobei n=1 ist und dann aufeinanderfolgend n jeweils um 1 erhöht wird, und Anwenden der exklusiv-oder-Funktion auf das Ergebnis und das nächste p-te Byte.

4. Verfahren nach Anspruch 1, ferner mit dem Schritt des Anwendens einer Delinearisierungsfunktion auf die Stromverschlüsselung.

5. Verfahren nach Anspruch 4, wobei die Delinearisierungsfunktion eine Substitutionsverschlüsselung ist.

6. Verfahren nach Anspruch 1, wobei jede der n Zufallszahlen erzeugt wird durch:

   i) Erzeugen einer n+2-ten Zufallszahl, die nicht ein perfektes Quadrat darstellt,
   ii) Berechnen der Quadratwurzel der n+2-ten Zufallszahl,
   iii) Erzeugen einer n+3-ten Zufallszahl,
   iv) Beginnen mit einer Ziffer in der Quadratwurzel der n+2-ten Zufallszahl, deren Position auf Basis der n+3-ten Zufallszahl berechnet ist, Nehmen von begrenzten Folgen von Ziffern aus der Quadratwurzel der n+2-ten Zufallszahl der Reihe nach und Umsetzen jeder begrenzten Folge in ein Byte,
   v) Zusammenfügen jedes Bytes der Reihe nach bis die ausgewählte Länge $m_n$ für jede der n Zufallszahlen erreicht wurde.

7. Verfahren nach Anspruch 6, wobei die begrenzte Folge von Ziffern wenigstens 4 Ziffern lang ist.

8. Verfahren nach Anspruch 7, wobei die begrenzte Folge in ein Byte durch Anwenden einer mod-Funktion umgesetzt wird.

9. Verfahren nach Anspruch 8, wobei die begrenzte Folge in ein Byte durch Anwenden einer mod-256-Funktion umgesetzt wird.

10. Computerprogrammprodukt zum Erzeugen einer Stromverschlüsselung mit einer Länge von x Bytes, wobei das Computerprogrammprodukt ein computerverwendbare Medium mit computerlesbaren Programmcodemitteln, die in dem Medium enthalten sind, aufweist, zum:

    i) Erzeugen von n eindeutigen Zufallszahlen, wobei jede eine sich nicht wiederholende Länge von $m_n$ Bytes aufweist, wobei $m_n$ eine Primzahl ist,
    ii) Erzeugen einer n+1-ten Zufallszahl R,
    iii) für jedes Byte, dessen Position in der n-ten Zufallszahl p darstellt, wobei $p = \mathrm{Mod}\, m_n (R)$, aufeinanderfolgendes Anwenden einer Funktion auf jedes p-te Byte von jeder der n Zufallszahlen zum Erzeugen eines Wertes,
    iv) Erhöhen des Wertes von p um 1, und
    v) Wiederholen der Schritte iii) und iv) und Zusammenfügen jedes der in Schritt iii) erzeugten Werte mit dem vorherigen in Schritt iii) erzeugten Wert, bis die Stromverschlüsselung mit einer Länge von x Bytes erzeugt wurde.

11. Computerprogrammprodukt nach Anspruch 10, wobei die ausgewählte Länge $m_n$ jedes Unter-Schlüssels eine Primzahl größer als 10 ist.

12. Computerprogrammprodukt nach Anspruch 10, wobei die aufeinanderfolgend auf jedes der p-ten Bytes der n Zufallszahlen angewandte Funktion die exklusiv-oder-Funktion darstellt, die durch Erhalten des Ergebnisses des Anwendens der exklusiv-oder-Funktion zunächst auf das n-te und das n+1-te Paar von p-ten Bytes angewendet wird, wobei n=1 ist und dann aufeinanderfolgend n jeweils um 1 erhöht wird, und Anwenden der exklusiv-oder-Funktion auf das Ergebnis und das nächste p-te Byte.

13. Computerprogrammprodukt nach Anspruch 10, wobei das computerverwendbare Medium in dem Medium enthaltene, computerlesbare Programmcodemittel aufweist, für den weiteren Schritt des Anwendens einer Delinearisierungsfunktion auf die Stromverschlüsselung.

14. Computerprogrammprodukt nach Anspruch 13, wobei die Delinearisierungsfunktion eine Substitutionsverschlüsselung ist.

**15.** Computerprogrammprodukt nach Anspruch 10, wobei jede der n Zufallszahlen erzeugt wird durch:

> i) Erzeugen einer n+2-ten Zufallszahl, die nicht ein perfektes Quadrat darstellt,
> ii) Berechnen der Quadratwurzel der n+2-ten Zufallszahl,
> iii) Erzeugen einer n+3-ten Zufallszahl,
> iv) Beginnen mit einer Ziffer in der Quadratwurzel der n+2-ten Zufallszahl, deren Position auf Basis der n+3-ten Zufallszahl berechnet ist, Nehmen von begrenzten Folgen von Ziffern aus der Quadratwurzel der n+2-ten Zufallszahl der Reihe nach und Umsetzen jeder begrenzten Folge in ein Byte,
> v) Zusammenfügen jedes Bytes der Reihe nach bis die ausgewählte Länge $m_n$ für jede der n Zufallszahlen erreicht wurde.

**16.** Computerprogrammprodukt nach Anspruch 15, wobei die begrenzte Folge von Ziffern wenigstens 4 Ziffern lang ist.

**17.** Verfahren nach Anspruch 15, wobei die begrenzte Folge in ein Byte durch Anwenden einer mod-Funktion umgesetzt wird.

**18.** Verfahren nach Anspruch 17, wobei die begrenzte Folge in ein Byte durch Anwenden einer mod-256-Funktion umgesetzt wird.

**Revendications**

**1.** Procédé de génération d'un chiffre continu ayant une longueur de x octets, le procédé comprenant les étapes consistant à :

> i) sélectionner un nombre n représentant un certain nombre de sous-clés, et n nombres premiers uniques $m_n$ représentant chacun une sous-clé non répétitive unique d'une longueur de $m_n$ octets ;
> ii) générer n nombres aléatoires uniques, ayant chacun une longueur non répétitive de $m_n$ octets ;
> iii) générer un n+1$^{ième}$ nombre aléatoire R ;
> iv) pour chaque octet dont la position dans ledit énième numéro aléatoire est p, où p= Mod$m_n$, (R), appliquer consécutivement une fonction à chaque p$^{ième}$ octet de chacun desdits n nombres aléatoires pour générer une valeur ;
> v) incrémenter la valeur de p de 1 ; et
> vi) répéter l'étape iv) et l'étape v) et concaténer chacune desdites valeurs produites à l'étape iv) à la valeur précédente produite à l'étape iv) jusqu'à ce que ledit chiffre continu ayant une longueur de x octets soit produit.

**2.** Procédé selon la revendication 1, dans lequel ladite longueur sélectionnée $m_n$ de chacune desdites sous-clés est un nombre premier supérieur à 10.

**3.** Procédé selon la revendication 1, dans lequel ladite fonction appliquée de manière consécutive à chacun desdits p$^{ième}$ octets desdits n nombres aléatoires est la fonction ou exclusif qui est appliquée en obtenant le résultat de l'application de la fonction ou exclusif initialement au n$^{ième}$ et à la n+1$^{ième}$ paire de p$^{ième}$ octets où n=1 et incrémenter ensuite de manière consécutive n de 1 et appliquer la fonction ou exclusif audit résultat et au p$^{ième}$ octet suivant.

**4.** Procédé selon la revendication 1, comprenant en outre l'étape consistant à appliquer une fonction de dé-linéarisation audit chiffre continu.

**5.** Procédé selon la revendication 4, dans lequel ladite fonction de dé-linéarisation est un chiffre de substitution.

**6.** Procédé selon la revendication 1, dans lequel chacun desdits n nombres aléatoires sont générés en :

> i) générant un nombre aléatoire n+2$^{ième}$ qui n'est pas un carré parfait ;
> ii) calculant la racine carrée dudit nombre aléatoire n+2$^{ième}$ ;
> iii) générant un nombre aléatoire n+3$^{ième}$ ;
> iv) commençant par un nombre dont la position dans ladite racine carrée dudit nombre aléatoire n+2$^{ième}$ est calculée sur la base dudit nombre aléatoire n+3$^{ième}$, en prenant des chaînes finies de nombre à partir de ladite racine carrée dudit nombre aléatoire n+2$^{ième}$ de manière séquentielle et en convertissant chaque chaîne finie en un octet ;

v) concaténant chaque octet de manière séquentielle jusqu'à ce que la longueur sélectionnée $m_n$ de chacun desdits n nombres aléatoires ait été atteinte.

7. Procédé selon la revendication 6, dans lequel lesdites chaînes finies de nombres ont une longueur d'au moins 4 chiffres.

8. Procédé selon la revendication 7, dans lequel ladite chaîne finie est convertie en un octet en appliquant une fonction mod.

9. Procédé selon la revendication 8, dans lequel ladite chaîne finie est convertie en un octet en appliquant une fonction mod 256.

10. Produit programme d'ordinateur enregistré sur un support lisible par un ordinateur, **caractérisé en ce qu'**il comprend des instructions de code de programme pour l'exécution des étapes consistant à :

   i) générer n nombres aléatoires uniques, chacun ayant une longueur non répétitive de $m_n$ octets, où $m_n$ est un nombre premier ;
   ii) générer un n+1$^{ième}$ nombre aléatoire R ;
   iii) pour chaque octet dont la position dans ledit n$^{ième}$ nombre aléatoire est p, où p= Mod$m_n$(R), appliquer de manière consécutive une fonction à chaque p$^{ième}$ octet de chacun desdits n nombres aléatoires pour générer une valeur ;
   iv) incrémenter la valeur p de 1 ; et
   v) répéter les étapes iii) et iv) et concaténer chacune desdites valeurs produites à l'étape iii) à la valeur précédente produite à l'étape iii) jusqu'à ce que ledit chiffre continu ayant une longueur de x octets soit obtenu.

11. Produit programme d'ordinateur selon la revendication 10, dans lequel ladite longueur sélectionnée $m_n$ de chacune desdites sous-clés est un nombre premier supérieur à 10.

12. Produit programme d'ordinateur selon la revendication 10, dans lequel ladite fonction appliquée de manière consécutive à chacun desdits p$^{ième}$ octets desdits n nombres aléatoires est la fonction ou exclusif, qui est appliquée de manière consécutive en obtenant le résultat de l'application de la fonction ou exclusif initialement à la n$^{ième}$ et n+1$^{ième}$ paire de p$^{ième}$ octets où n=1 et incrémenter ensuite de manière consécutive n de 1 et appliquer la fonction ou exclusif audit résultat et au p$^{ième}$ octet suivant.

13. Produit programme d'ordinateur selon la revendication 10, **caractérisé en ce qu'**il comprend également des instructions de code de programme pour l'exécution de l'étape consistant à appliquer une fonction de dé-linéarisation audit chiffre continu.

14. Produit programme d'ordinateur selon la revendication 13, dans lequel ladite fonction de dé-linéarisation est un chiffre de substitution.

15. Produit programme d'ordinateur selon la revendication 10, dans lequel chacun desdits n nombres aléatoires est généré en :

   i) générant un nombre aléatoire n+2$^{ième}$ qui n'est pas un carré parfait ;
   ii) calculant la racine carrée dudit nombre aléatoire n+2$^{ième}$ ;
   iii) générant un nombre aléatoire n+3$^{ième}$ ;
   iv) commençant par un nombre dont la position dans ladite racine carrée dudit nombre aléatoire n+2$^{ième}$ est calculée sur la base dudit nombre aléatoire n+3$^{ième}$, en prenant des chaînes finies de nombres à partir de ladite racine carrée dudit nombre aléatoire n+2$^{ième}$ de manière séquentielle et en convertissant chaque chaîne finie en un octet ;
   v) concaténant chaque octet généré de manière séquentielle jusqu'à ce que la longueur sélectionnée $m_n$ de chacun desdits n nombres aléatoires ait été atteinte.

16. Produit programme d'ordinateur selon la revendication 15, dans lequel lesdites chaînes finies de nombres ont au moins 4 chiffres.

17. Produit programme d'ordinateur selon la revendication 15, dans lequel ladite chaîne finie est convertie en un octet en appliquant une fonction mod.

18. Produit programme d'ordinateur selon la revendication 17, dans lequel ladite chaîne finie est convertie en un octet en appliquant une fonction mod 256.

FIG. 1

EP 1 566 009 B1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4058673 A